# EUROPEAN PATENT APPLICATION

(11) **EP 2 535 100 A1**
(43) Date of publication of application: **19.12.2012**
(21) Application number: 11170064.7
(22) Date of filing: 15.06.2011
(51) Int. Cl.: B01D 53/14, C02F 1/70

(54) **Process for chemical destruction of compounds from amine-based carbon capture**

(71) Applicant: Sinvent AS, 7465 Trondheim (NO)
(72) Inventor: Zahlsen, Kolbjørn, N-7465 Trondheim (NO); Wittgens, Bernd, N-7465 Trondheim (NO); Einbu, Aslak, N-7465 Trondheim (NO)
(74) Representative: Haley, Stephen

(57) **Abstract**

The present invention provides a liquid handling system comprising a reactor, wherein the reactor contains a gaseous phase and an aqueous phase, both phases being in contact with a heterogeneous hydrogenation catalyst immobilised or suspended within the aqueous phase, wherein the gaseous phase comprises hydrogen and wherein the aqueous phase comprises (i) a solution of amines; and (ii) nitrosamine and/or nitramine compounds resulting from amine-based gas sweetening processes. The invention further relates to a process for *in-situ* destruction of compounds in the aqueous phase from a scrubber system, wherein the process comprises contacting the aqueous phase with a gas phase and a heterogeneous hydrogenation catalyst, wherein the gas phase comprises hydrogen and wherein the aqueous phase comprises (i) a solution of amines; and (ii) nitrosamine and/or nitramine compounds resulting from amine-based gas sweetening.

## Description

### Field of the Invention

The present invention relates to an integrated water treatment system and process for *in situ* destruction of pollutants from gas scrubber systems, such as CO₂-absorption systems, from which environmentally-adverse compounds resulting from amine-based carbon capture are released.

### Background to the Invention

The capture of CO₂ from industrial gases, such as flue gases from power plants, refineries, petrochemical plants and natural gas processing plants is of significant environmental interest as a means of reducing or minimizing climate change resulting from man-made emissions.

Processes of amine gas treatment or acidic gas removal (also known as gas sweetening) have been developed, and these processes use aqueous solutions of amines to remove H₂S and CO₂ from gases.

Gas sweetening takes place in absorber devices, also known as "scrubbers". Scrubbers are one of the primary devices that control gaseous emissions, especially acid gases, by using liquid to wash unwanted pollutants from the gas stream.

Carbon capture processes that have been developed based on aqueous amine solutions are technically and economically feasible; however the reduction of CO₂ in the flue gas is often accompanied by emissions of other environmentally-damaging compounds which are formed during the process, as a result of degradation reactions and are emitted from the scrubber in the wash water. Degradation reaction products, which include but are not limited to, nitrosamines and nitramines, are formed through the chemical reaction of secondary amines with gases and liquid solutes containing nitrogen, such as NO, NxOy and NH₃ The formation of such degradation products is promoted by elevated temperature, acidic environment and presence of metallic catalysts.

Nitrosamines and nitramines (together with amines and degradation products of amines, and other related species) are present to some extent in all liquid phases of the amine-based carbon capture process. In particular, these pollutants accumulate in the final wash water section of the absorber of an amine based carbon capture plant, where they are removed form the gas stream. Once the concentration of one or more of these compounds increases beyond the combined solubility in the wash water the compounds will be released to the atmosphere, potentially causing significant environmental damage. Simultaneously, the compound concentration also builds up in all liquid streams of the carbon-capture process, such as the absorption liquid and reclaimed waste.

N-nitrosamines are carcinogenic, and highly unwanted in emissions from amine-based carbon capture. It is therefore of great importance to eliminate the emission of nitrosamines to air.

Frierdich et al. (Environ. Sci. Technol. 2008, 42, 262-269) describes a process for the destruction of NDMA (N-Nitrosodimethylamine) and the chemically related nitrosamines NDEA, NDPA, NDBA and NDPhA in drinking water, by use of a nickel catalyst and hydrogen in the following reaction:

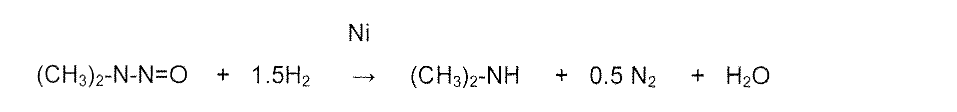

In order to address the environmental concerns associated with the release of nitrosamine and nitramine compounds produced as a result of the amine-based carbon capture process, there is a need for the development of processes to enable the efficient removal of the compounds from CO₂-absorption systems.

### Summary of the Invention

According to a first aspect, the invention provides a liquid handling system comprising a reactor, wherein the reactor contains a gaseous phase and an aqueous phase, both phases being in contact with a heterogeneous hydrogenation catalyst immobilised or suspended within the aqueous phase, wherein the gaseous phase comprises hydrogen and wherein the aqueous phase comprises (i) a solution of amines; and (ii) nitrosamine and/or nitramine compounds resulting from amine-based gas sweetening processes. The system of the invention enables nitrosamine and/or nitramine compounds present in the aqueous phase to be destroyed *in situ* before they are released into the atmosphere.

According to a second aspect, the invention provides a process for *in-situ* destruction of compounds in the aqueous phase from a scrubber system, wherein the process comprises contacting the aqueous phase with a gas phase and a heterogeneous hydrogenation catalyst, wherein the gas phase comprises hydrogen and wherein the aqueous phase comprises (i) a solution amines; and (ii) nitrosamine and/or nitramine compounds resulting from amine-based gas sweetening.

### Description of the Drawings

Figure 1 is a schematic illustration of an embodiment the system of the invention showing the reactor only; and
Figure 2 is a schematic illustration of an embodiment the system of the invention showing the reactor connected via a loop to a scrubber tower.

### Detailed Description of the Invention

The present invention is based on the surprising realization that the method described by Frierdich *et al.* for eliminating nitrosamine compounds from drinking water can be applied to the removal of nitrogen-containing compounds in the aqueous phase of an amine-based carbon capture process. The present inventors have found that it is possible to reduce emission of both nitrosamines and nitramines from, for example, CO₂-absorption plants to the environment to a level below the detection limit of the most sensitive instruments (LC-MS-MS-QQQ). Consequently, the invention has significant environmental benefits.

According to a first aspect, the invention provides a liquid handling system comprising a reactor, wherein the reactor contains a gaseous phase and an aqueous phase, both phases being in contact with a heterogeneous hydrogenation catalyst immobilised or suspended within the aqueous phase, wherein the gaseous phase comprises hydrogen and wherein the aqueous phase comprises (i) a solution of primary and/or secondary amines; and (ii) nitrosamine and/or nitramine compounds resulting from amine-based gas sweetening processes.

As used herein, the term "gas sweetening process" is intended to have its usual meaning in the art, referring to processes that use aqueous amine solutions to remove H₂S and CO₂ from gases.

The aqueous phase comprises (i) a solution of amines; and (ii) nitrosamine and/or nitramine compounds.

As used herein, the term "amine" includes primary, secondary and/or tertiary amines. Primary amines have the general formula R-NH₂. Secondary amines have the general formula (R₁,R₂)-NH. Tertiary amines have the general formula (R₁,R₂,R₃)-N. Examples of amine compounds include, but are not limited to, mono-ethanol-amine (MEA), di-ethanol-amine (DEA) methyl-di-ethanol-amine (MDEA), di-iso-propyl-amine (DIPA), diglycolamine (DGA), piperazine, 2-amino-2-methyl-1-propanol (AMP) and di-methyl-mon-ethanol-amine (DMMEA).

As used herein, the term "nitrosamine" includes, but is not limited to, compounds having the general formula R-N-N=O or (R₁,R₂)-N-N=O and includes the following specific compounds: N-Nitrosodimethylamine (NDMA); N-Nitrosodiethylamine (NDEA); N-Nitrosodi-n-propylamine (NDPA); N-Nitrosodi-n-butylamine (NDBA); N-Nitrosopiperidine (NPIP); N-Nitrosopyrollidine (NPYR); N-Nitrosomorpholine (NMOR); N-Nitrosomethylethylamine (NMEA); N-Nitrosoiisopropylamine (NDiPA); N-Nitrosomethyl-n-butylamine (NMBA); N-Nitrosomethyl-n-butylamine (NEBA); N-Nitroso-n-propyl-n-butylamine (NPBA); N-Nitrosodiamylamine (NDAmA); N-Nitrosodiethanolamine (NDELA); N-Nitrosopiperazine (NPZ); and 1,4-Dinitrasopiperazine (NDiPZ).

As used herein, the term "nitramine" includes, but is not limited to, compounds having the general formula R-N-NO₂ or (R₁,R₂₎-N-NO₂ and includes the following specific compounds: methylnitramine (MeNH-NO2); ethylnitramine (EtNH-NO2); dimethylnitramine (Me2N-N02); diethylnitramine (Et2N-N02); MEA-nitramine (HOCH2CH2NH-N02); AMP-nitramine (HOCH2C(CH3)2NH-NO2); Morphaline-nitramine; and Piperazine-mono-nitramine.

The gaseous phase is preferable hydrogen gas (H₂), and is preferably provided together with a carrier gas such as nitrogen (N₂) or air.

The heterogeneous hydrogenation catalyst is selected from platina, palladium, nickel and Raney nickel, and is preferably Raney nickel.

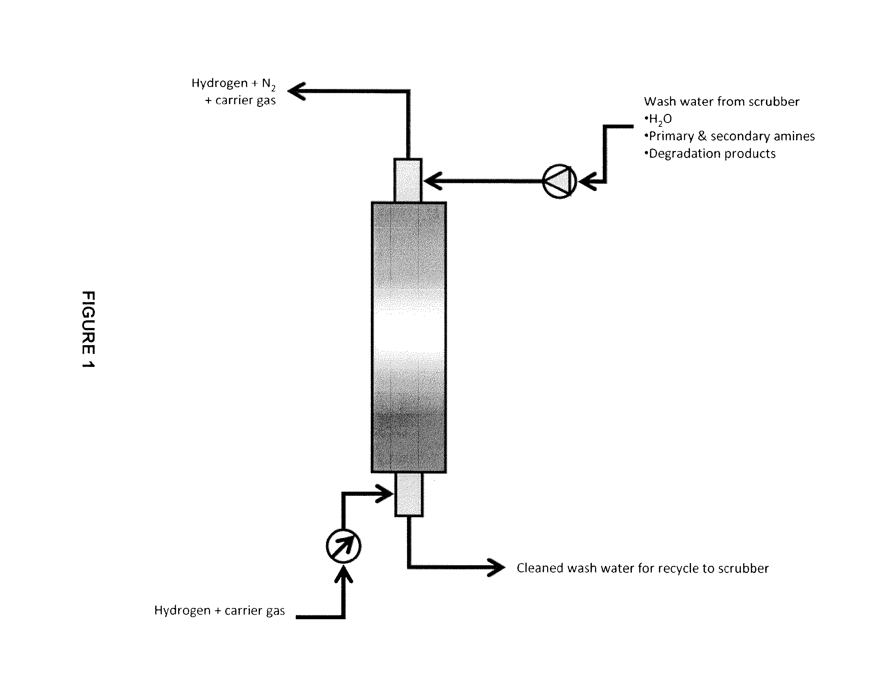

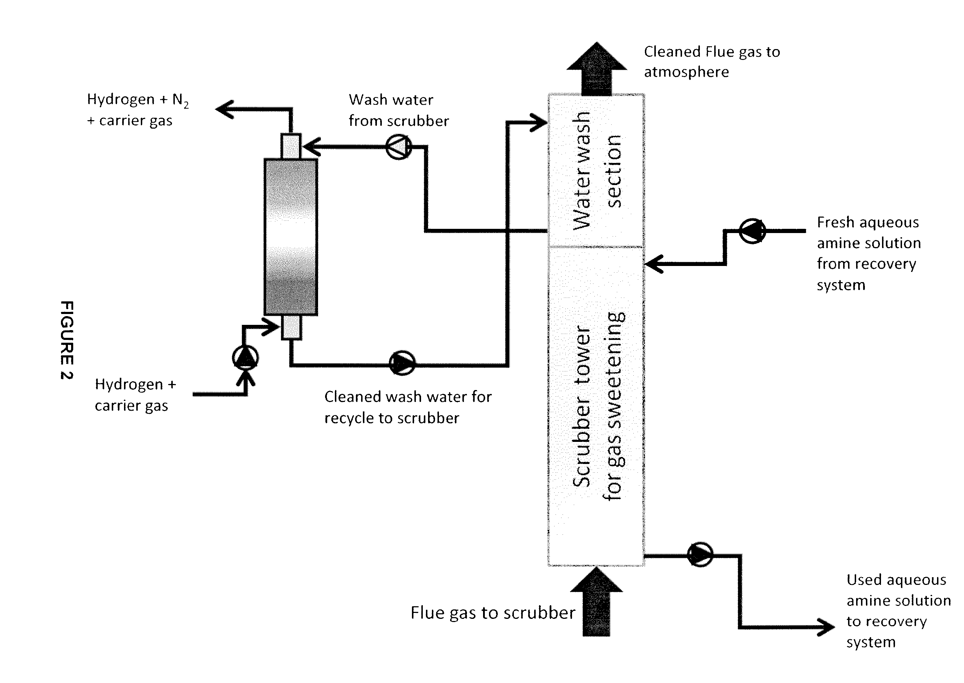

A simple system according to the invention is shown in Figure 1. However, preferably the system of the invention is integrated into a CO₂-absorption system. As such, the system preferably further comprises an absorber tower or scrubber. Amine-based carbon capture of pollutants present in flue gas takes place in the scrubber. The scrubber is connected to the reactor, preferably in a loop, such that wash water circulating the upper most section of the scrubber containing an aqueous solution of primary and/or secondary amines and compounds including nitrosamines and/or nitramines is transferred to the reactor, where the nitrosamines and/or nitramines are destroyed. The chemical destruction process that takes place in the reactor, according to the present invention, produces cleaned water which can be transferred via the loop connection back to the scrubber where it can be recycled. This arrangement is shown in Figure 2.

According to a second aspect, the invention provides a process for *in-situ* destruction of compounds in the aqueous phase from a scrubber system, wherein the process comprises contacting the aqueous phase with a gas phase and a heterogeneous hydrogenation catalyst, wherein the gas phase comprises hydrogen and wherein the aqueous phase comprises (i) a solution of primary and/or secondary amines; and (ii) nitrosamine and/or nitramine compounds resulting from amine-based gas sweetening.

The compound-destruction process is preferably integrated with a gas sweetening process (e.g. CO₂-absorption process) that takes place in the scrubber system and the chemical reactions are performed *in situ* (i.e. in the reaction mixture) in order to reduce manual handling.

The reaction preferably takes place within a reactor which is connected to the water wash circulation loop of a CO₂-capture plant. The process can be operated as a batch process or as a continuous process. If using a batch process, it is preferable for the hydrogen gas to be added to a suspension of the aqueous phase and heterogeneous catalyst. Alternatively, if operating a continuous process, it is preferably for the gas and aqueous phases to be fed co-currently or counter-currently to a continuous flow reactor with an immobilized catalyst, a moving bed reactor, a fluidized bed reactor or a bubble column wherein the catalyst is suspended in the fluid.

The process is carried out at a temperature of from 4°C to 50°C, preferably at room temperature, and at a pressure of from atmospheric pressure (1 bar(g)) to 3 bar(g) and a partial pressure of hydrogen of at least 0.01 bar.

Advantageously, the cleaned wash water, which is a product of the process of the invention, can be fed back into the CO₂-capture system and used to form the aqueous phase containing the nitrosamine and/or nitramine compounds.

The process of the invention successfully addresses the objectives of (1) removing and destroying potentially harmful and carcinogenic compounds from sweetened flue gas; (2) recovery of parent amines in the wash water; and (3) reduction of toxicity of waste to be handled from the reactor.

## Claims

1. A liquid handling system comprising a reactor, wherein the reactor contains a gaseous phase and an aqueous phase, both phases being in contact with a heterogeneous hydrogenation catalyst immobilised or suspended within the aqueous phase, wherein the gaseous phase comprises hydrogen and wherein the aqueous phase comprises (i) a solution of amines; and (ii) nitrosamine and/or nitramine compounds resulting from amine-based gas sweetening processes.

2. A system according to claim 1, wherein the nitrosamine compounds in the aqueous phase include compounds having the general formula R-N-N=O or (R₁,R₂)-N-N=O.

3. A system according to claim 1 or claim 2, wherein the nitramine compounds in the aqueous phase include compounds having the general formula R-N-NO₂ or (R₁,R₂)-N-NO₂.

4. A system according to any preceding claim, wherein heterogeneous catalyst is selected from platina, palladium, nickel and Raney nickel.

5. A system according to any preceding claim, wherein the reactor is connected to a scrubber.

6. A system according to claim 5, wherein the reactor is connected to the scrubber via a loop which carries the aqueous phase comprising (i) and (ii) from the scrubber to the reactor and carries cleaned wash water from the reactor to the scrubber.

7. A system according to claim 5 or claim 6, wherein the scrubber is part of a CO₂-absorption system.

8. A process for *in-situ* destruction of compounds in the aqueous phase from a scrubber system, wherein the process comprises contacting the aqueous phase with a gas phase and a heterogeneous hydrogenation catalyst, wherein the gas phase comprises hydrogen and wherein the aqueous phase comprises (i) a solution of amines; and (ii) nitrosamine and/or nitramine compounds resulting from amine-based gas sweetening.

9. A process according to claim 8, wherein the compounds in the aqueous phase include compounds having the general formula R-N-N=O and/or (R₁,R₂)-N-N=O and/or R-N-NO₂ and/or (R₁,R₂)-N-NO₂.

10. A process according to claim 8 or claim 9, wherein the heterogeneous catalyst is selected from platina, palladium, nickel and Raney nickel.

11. A process according to any of claims 9 to 10, wherein the process is a batch process.

12. A process according to claim 11, wherein the catalyst and gas are suspended in the aqueous phase.

13. A process according to any of claims 8 to 12, wherein the process is a continuous process.

14. A process according to claim 13, wherein the heterogeneous catalyst is suspended in the aqueous phase or immobilised within a reactor housing the liquid phase.

15. A process according to claim 13 or claim 14, wherein the gas is bubbled through the aqueous phase co-currently or counter-currently.

16. A process according to any of claims 8 to 15, wherein the process is carried out at a temperature from 4°C to 50°C.

17. A process according to any of claims 9 to 18, wherein the process is carried out at a pressure range from 1 bar(g) to 3 bar(g) and a partial pressure of hydrogen of at least 0.01 bar.
